# EUROPÄISCHE PATENTSCHRIFT

(11) **EP 2 491 713 B1**
(45) Veröffentlichungstag und Bekanntmachung des Hinweises auf die Patenterteilung: **11.04.2018**
(21) Anmeldenummer: 10779688.0
(22) Anmeldetag: 20.10.2010
(51) Int. Cl.: H04N 5/247, H04N 5/335, G01N 21/88

(54) **BILDSENSORANORDNUNG ZUR ERFASSUNG VON BILDINFORMATIONEN FÜR DIE AUTOMATISCHE BILDDATENVERARBEITUNG**
IMAGE SENSOR ARRAY FOR DETECTING IMAGE INFORMATION FOR AUTOMATIC IMAGE DATA PROCESSING
ENSEMBLE DE DÉTECTION D'IMAGES POUR LA CAPTURE D'INFORMATIONS D'IMAGE POUR LE TRAITEMENT AUTOMATIQUE DE DONNÉES D'IMAGE

(30) Priorität: 20.10.2009 DE 102009050073
(43) Veröffentlichungstag der Anmeldung: 29.08.2012
(73) Patentinhaber: Xapt GmbH, 45897 Gelsenkirchen (DE)
(72) Erfinder: HOWAH, Lothar, 45966 Gladbeck (DE)
(74) Vertreter: Cohausz Hannig Borkowski Wißgott
(86) Internationale Anmeldenummer: PCT/EP2010/006404
(87) Internationale Veröffentlichungsnummer: WO 2011/047847

(56) Entgegenhaltungen:
- EP-A1- 1 223 739
- US-A- 4 908 751
- WILBURN B ET AL: "High Performance Imaging Using Large Camera Array", ACM TRANSACTIONS ON GRAPHICS, ACM, US, Bd. 24, Nr. 3, 1. Juli 2005 (2005-07-01), Seiten 765-776, XP002376213, ISSN: 0730-0301, DOI: DOI:10.1145/1073204.1073259
- LEVOY M: "LIGHT FIELDS AND COMPUTATIONAL IMAGING", COMPUTER, IEEE SERVICE CENTER, LOS ALAMITOS, CA, US, [Online] Bd. 39, Nr. 8, 1. August 2006 (2006-08-01) , Seiten 46-55, XP002501300, ISSN: 0018-9162, DOI: DOI:10.1109/MC.2006.270 [gefunden am 2006-08-01]
- HOWAH L: "LINE SCAN CAMERAS IN MULTIPLE SENSOR SYSTEMS", AISE STEEL TECHNOLOGY, AISE, PITTSBURG, PA, US, Bd. 78, Nr. 2, 1. Februar 2001 (2001-02-01), Seiten 48-51, XP001011993, ISSN: 0021-1559

## Beschreibung

Die vorliegende Erfindung betrifft eine Bildsensoranordnung zur Erfassung von Bildinformationen für die automatische Bilddatenverarbeitung mit einer Vielzahl gleichartiger Sensorzellen, die jeweils einen Bildsensor mit einer eigenen Sensoroptik, einen Bildspeicher zur Speicherung von Bildinformationen des Bildsensors und eine Auswerteeinheit zur Verarbeitung der Bildinformationen aufweisen, wobei die Sensorzellen in zumindest einer Reihe derart angeordnet sind, dass sich die Erfassungsbereiche der Bildsensoren unmittelbar benachbarter Sensorzellen überlappen.

Eine matrixförmige Anordnung von 100 Kameras, bei der sich die Erfassungsbereiche der Bildsensoren unmittelbar benachbarter Kameras überlappen, ist aus der Veröffentlichung "High Performance Imaging Using Large Camera Arrays", Bennett Wilburn et al., Association for Computing Machinery, 2005, bekannt. Die Kameras sind aus CMOS Bildsensoren gebildet und auf Plättchen mit 30mm Kantenlänge montiert. Über ein 2m Flachbandkabel besteht jeweils eine Verbindung zu einer Verarbeitungsplatine. Diese sind mittels IEEE1394 in einer Baumstruktur miteinander verbunden, verarbeiten die Bilddaten der jeweiligen Kamera lokal und leiten die verarbeiteten Bilddaten in Echtzeit zu einem System aus vier PCs, welche die Bilddaten zu einem Gesamtbild zusammensetzen. Die Kameras können untereinander nicht unmittelbar kommunizieren. Jede Kamera besitzt eine Signalleitung, sodass hier 100 Signalleitungen über Datenkonzentratoren unidirektional zu einer Vielzahl von Auswerterechnern (PCs) führen.

Das US-Patent 4,908,751 A offenbart ein Datenverarbeitungssystem mit einer matrixförmigen Anordnung von Energiedetektoren, die jeweils eine Prozessoreinheit besitzen, wobei unmittelbar und mittelbar benachbarte Prozessoreinheiten miteinander Daten austauschen können. Die matrixförmig angeordneten optischen Komponenten sind dabei auf einem "Detection Array", die ebenfalls matrixförmig angeordneten Prozessoreinheiten, auf einem vom "Detection Array" verschiedenen "Processing Array" angeordnet, wobei die beiden Arrays kabelverbunden hintereinanderliegen.

In vielen technischen Aufgabenstellungen zur Steuerung oder Qualitätskontrolle industrieller Anlagen besteht die elementare Aufgabe darin, von einem Objekt die Oberfläche zu inspizieren, eine dimensionale Größe zu ermitteln und diese mit einer Referenzgröße zu vergleichen, Primäre Messgrößen wie Lage, Länge, Breite oder Höhe dienen dazu, sekundäre Größen wie Fläche, Volumen, Maßhaltigkeit, Vollständigkeit oder Ähnliches zu ermitteln.

Diese messtechnischen Aufgaben schnell und berührungslos, d.h. verschleißfrei zu lösen, gehört zu den Leistungsmerkmalen einer speziellen Technologie, die von der Szene eines Messobjektes Bilder aufzeichnet und dieses mit Methoden und Algorithmen der so genannten Bilddatenverarbeitung auswertet. Die Technologien werden unter dem Titel industrielle Bilddatenverarbeitung (IBV) zusammengefasst und besitzen ein breites Spektrum technischer Anwendung. So findet sich Bilddatenverarbeitung zum Beispiel auch in Anwendungen der Medizin, der Landwirtschaft oder Sicherheitstechnik.
Das Optimieren von industriellen Produktionsverfahren ist eine konkrete Herausforderung aus der Menge aller Applikationen und bietet als Ergebnis die Reduktion von Ausschuss bzw. der primär eingesetzten Rohstoffe sowie der sekundären Faktoren, wie Energieeinsatz und Umweltbelastung. Mit dem Einsatz von IBV wird eine Steigerung von Qualität und Produktivität der Produktionsanlagen angestrebt, was sich in einer Steigerung der Wirtschaftlichkeit, der internationalen Wettbewerbsfähigkeit und Sicherung von Arbeitsplätzen widerspiegelt.

Zur Sicherung der Produktqualität und Anlagenverfügbarkeit werden bei Herstellern von Band- bzw. Bahnwarenmaterial Inspektionssysteme eingesetzt, die typischerweise aus einer Vielzahl von Kameras mit jeweils einem Bildsensor bestehen. Auch im Forschungsgebiet der technischen Bildverarbeitung werden in zahlreichen Forschungseinrichtungen mit Methoden der multisensoriellen Datenfusion Lösungswege gesucht, den Informationsgewinn aus Bildszenen zu maximieren. Hier werden die Daten mehrerer Sensoren kombiniert. Aus den fusionierten Bildinformationen lassen sich im Vergleich zur Verarbeitung von einzelnen Bildszenen weitere Schlussfolgerungen über physikalische Ereignisse, Aktivitäten oder Situationen ziehen.

Im Bereich der Bandinspektionssysteme wird die Einsatzgrenze industrieller Bildverarbeitung deutlich. Besonders bei kleinen Produktionsanlagen mit wenig hochwertigen Gütern rechnet sich der hohe Investitionsbedarf eines IBV-Systems nicht immer, weil die eingesetzten Komponenten sehr kostenintensiv sind. Hinzu kommt ein geringer Einbauraum in kleinen Produktionsmaschinen oder fehlendes qualifiziertes Personal, wodurch die Integration der Systeme verhindert wird.

Industrielle Bildverarbeitungssysteme besitzen eine Signalkette, die im Wesentlichen aus Beleuchtung, Abbildungsoptik, Bildaufnehmer, Datenschnittstelle und Auswerterechner in einzelner oder Mehrfachanordnung bestehen. Die Systeme unterscheiden sich entsprechend Ihrer Art und Anzahl in den Lichtquellen, den Objektiven, der Sensortechnologie, der Datenschnittstelle und der Auswerterechner. Durch die Kombination dieser Komponenten in Verbindung mit entsprechenden Algorithmen lassen sich viele Aufgabenstellungen lösen. Wenn allerdings bei einem großen Messfeld, beispielsweise von einigen hundert Zentimetern, und gleichzeitig geringer Distanz zur Messebene bzw. Gegenstandsebene gemessen werden soll, werden komplexe und vergleichsweise teure IBV-Systeme benötigt. Am Markt existiert bisher kein IBV-System, auch nicht durch beliebige Kombination und Anzahl der oben aufgeführten Komponenten, das eine wirtschaftlich vertretbare Lösung darstellt, um sowohl bei geringem Bauraum, hoher Szenenauflösung und zugleich hoher Bildwiederholrate (also Messrate) große Bildszenen verzerrungsfrei und parallaxenfrei aufzuzeichnen und auszuwerten. Innerhalb vieler technischer Anwendungen sind aber diese Leistungsmerkmale zeitgleich erforderlich.

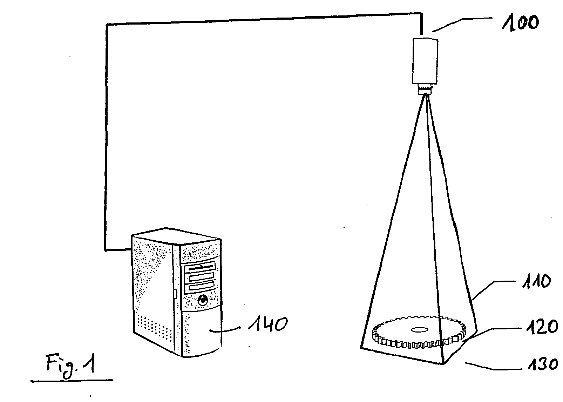

Figur 1 zeigte eine typische Anordnung eines elementaren IBV-Systems. Dabei ist eine Kamera 100 mit einem PC 140 verbunden. Die Kamera 100 besitzt einen Sichtbereich 110, nachfolgend auch Erfassungsbereich genannt, Innerhalb welchem ein Prüfobjekt 120, insbesondere ein Werkstück angeordnet ist, dessen Oberfläche die aufzunehmende Gegenstandebene 130 bildet. Die Kamera zeichnet eine Bildszene auf, in der das Werkstück 120 auf Vollständigkeit und/ oder Maßhaltigkeit überprüft wird. In der Gegenstandsebene 130 wir hierzu durch die Wahl eines geeigneten optischen Abbildungssystems, d.h. des Kameraobjektivs, der Sichtbereich 110 eingestellt, der das Prüfobjekt 120 vollständig erfasst. Findet die Messaufgabe innerhalb einer Maschine statt, wirkt sich der relativ große Abstand der Kamera 100 zur Gegenstandsebene 130 als technische Barriere aus.

Zur Verringerung der Gegenstandsweite wäre die Wahl eines Objektivs geringerer Brennweite möglich, was sich allerdings nachteilig auf die Abbildungsleistung des Objektivs auswirkt. Größere Bedeutung für messtechnische Aufgaben besitzt hier aber die nun stärkere Abhängigkeit des Abbildungsfaktors ß' von der Gegenstandsweite. Eine Lösungsvariante ist die Verwendung von Objektiven mit objektseitig telezentrischem Strahlengang. Zur Vermeidung von Perspektivfehlern können telezentrische Optiken (TZO) verwendet werden. Sie sind innerhalb des Telezentriebereiches nahezu frei von Perspektiven. Durch eine TZO werden Objekte unabhängig von ihrer Gegenstandsebene immer im selben Abbildungsmaßstab aufgezeichnet. Das Bildfeld einer TZ-Optik ist allerdings naturgemäß immer kleiner als der Durchmesser der Ausgangslinse des Objektivs und damit auf wenige Zentimeter beschränkt. Ein TZ-Objektiv mit einem Durchmesser von 15 cm bedingt jedoch erheblichen Bauraum und hohe Kosten sowie intensive Lichtquellen. Daher werden heute telezentrisch arbeitende IBV-Systeme eingesetzt, um kleine Teile zu vermessen.

Eine Alternative hierzu ist die Verteilung des Messbereiches auf mehrere Kameras, was jedoch bei großer Anzahl von Kameras schnell an die Grenzen moderner Bildeinzugskarten und auch PCs stößt und zudem erhebliche Kosten erzeugt. Mehrere konventionelle Kameras werden dabei reihenweise oder matrixförmigen angeordnet und über konventionelle Bildeinzugskarten (Frame Grabber) mit einem PC verbunden. Wollte man mit dieser Technologie allerdings zum Beispiel eine Matrix von 32 x 32 Kameras aufbauen, entstünde das Problem, dass die 1024 Signalleitungen mit keinem handelsüblichen Auswerterechner oder PC zu kontaktieren wären. Handelsübliche PCs sind in der Lage bis zu vier PCI-Steckkarten bzw. Frame Grabber aufzunehmen. Selbst wenn jeder Frame Grabber wiederum vier Signalkanäle besäße, könnten nur 16 Kameras je PC verbunden werden. Die begrenzte Rechenleistung von modernen PCs und die Tatsache dass 64 PCs erforderlich wären, verdeutlicht hier diese ungeeignete Systemanordnung. Neben den in Summe hohen Kosten für die Kameras und Frame Grabber, den Kosten von PC-Einschüben und 19"-Schränken zur Unterbringung, und den Bauraum für die Schaltschränke stellt die schwierige Wartbarkeit einen weiteren Mangel im Hinblick auf eine Integration ins industrielle Umfeld dar.

In Anwendungen, wo die Anforderung an die Szenenauflösung hoch ist und nur ein kleiner Bauraum verfügbar ist, werden heute oftmals Kamera bzw. Bildsensor translatorisch mit einem motorischen xy-Antrieb an den relevanten Bildbereich (Region Of Interest, ROI) verfahren. Hierdurch lassen sich sehr hohe Auflösungen der Szene bei hoher Abbildungsleistung erzielen. Mit entsprechenden Wegmesssystemen (Glasmaßstäbe) der Translatoren lässt sich auch eine geringe Messunsicherheit erreichen. Dennoch bestehen auch in dieser Systemkonstellation wesentliche Nachteile. Die Aufzeichnung bzw. Abtastung der Szene ist sehr zeitintensiv, da die Positionierung des Bildsensors einige 100 ms betragen kann. Ein mechanischer Antrieb ist zudem nicht wartungsfrei und verschleißfrei und besitzt somit eine relativ kurze Lebensdauer.

Es ist daher Aufgabe der vorliegenden Erfindung eine wartungsfreie und zuverlässige Bilderfassungseinheit sowie ein Verfahren für ein Bildverarbeitungssystem bereitzustellen, dass bei geringer Distanz zur Messebene eine große Bildszene mit hoher Szenenauflösung und zugleich hoher Bitwiederholrate verzerrungsfrei und parallaxenfrei aufzuzeichnen vermag und in der Herstellung und Anwendung zu geringen Kosten führt.

Diese Aufgabe wird durch die Bildsensoranordnung gemäß Anspruch 1 und das Verfahren nach Anspruch 18 gelöst. Vorteilhafte Weiterbildungen der Erfindung sind in den Unteransprüchen formuliert.

Erfindungsgemäß wird eine Bildsensoranordnung zur Erfassung von Bildinformationen für die automatische Bilddatenverarbeitung mit einer Vielzahl gleichartiger Sensorzellen vorgeschlagen, die jeweils einen Bildsensor mit einer eigenen Sensoroptik, einen Bildspeicher zur Speicherung von Bildinformation des Bildsensors und eine Auswerteeinheit zur Verarbeitung der Bildinformationen aufweisen, wobei die Sensorzellen in zumindest einer Reihe derart angeordnet sind, dass sich die Erfassungsbereiche der Bildsensoren unmittelbar benachbarter Sensorzellen überlappen, wobei jede Sensorzelle mindestens eine Datenschnittstelle zu einer benachbarten Sensorzelle aufweist, über die auf die Bilddaten des überlappenden Erfassungsbereichs der benachbarten Sensorzelle zugreifbar ist, wobei die Auswerteeinheiten jeweils dazu eingerichtet sind, eine Korrelation dieser Bilddaten zu bestimmen.

Nach dem erfindungsgemäßen Verfahren zur Erfassung von Bildinformationen für die automatische Bilddatenverarbeitung mittels der vorbeschriebenen Bildsensoranordnung erfasst jeder Bildsensor einer Sensorzelle einen Teilbereich einer Gegenstandsebene und speichert die Bilddaten in dem Bildspeicher der Sensorzelle ab, wobei sich die Erfassungsbereiche der Bildsensoren unmittelbar benachbarter Sensorzellen überlappen. Weiterhin wird über die Datenschnittstellen auf die Bilddaten des überlappenden Erfassungsbereichs der benachbarten Sensorzellen zugegriffen. Die Auswerteeinheiten der Sensorzellen bestimmen jeweils eine Korrelation dieser Bilddaten.

Die erfindungsgemäße Sensoranordnung führt mit Methoden industrieller Bildverarbeitung zu neuen Lösungswegen technischer Mess- und Prüfaufgaben. Konventionelle Kameras besitzen vorwiegend Punkt-zu-Punkt Datenschnittstellen, Die wenigen Kameras am Markt, die mit Netzwerkschnittstellen ausgerüstet sind, liefern durch eine geringe Datenrate dieser Netze nicht ausreichend schnelle Kommunikationsmöglichkeiten zwischen den Bildsensoren und dem Bildbearbeitungsprozessor (Framegrabber/Auswerterechner), um Nachbarschaftsbeziehungen auszuwerten, wie es die erfindungsgemäße Sensoranordnung durchzuführen vermag. Konventionelle IBV-Systeme besitzen quasi eine physikalische Sterntopologie und somit einen entsprechenden Flachenhals zum Auswerteprozessor.

Dadurch, dass jede Sensorzelle eine eigene Auswerteeinheit aufweist, ergibt sich eine Verteilung der Rechenleistung hin zum Bildsensor. Dies führt bei der erfindungsgemäßen Bildsensoranordnung zu einer skalierbaren Steigerung der Rechenleistung sowie skalierbaren Auflösung der Bildszene. Zudem entsteht eine Verlagerung der rechenintensiven Datenvorverarbeitung an den Ort der Datengenerierung. Die Bildsensoranordnung arbeitet mit einer hohen Messrate, da für jeden Bildsensor bereits in der Sensoranordnung eine Bilddatenauswertung erfolgt und extrahierte Szeneninformationen generiert werden.

Die Anzahl an Sensorzellen kann beliebig gewählt werden, insbesondere an die Größe der zu erfassenden Bildszene angepasst werden. Dabei wird unter einer Vielzahl an Sensorelementen im Sinne der vorliegenden Erfindung mindestens eine Anzahl im oberen einstelligen Bereich bis hin zu mehreren zehn oder gar hundert Sensorzellen verstanden. Die Bildsensoren besitzen über ihre Datenschnittstellen eine hohe Konnektivität. Dadurch, dass jeder Bildsensor eine eigene Sensoroptik aufweist, bilden sie autonome optische Abbildungssysteme, die sonst lediglich aus der Tierwelt bekannt sind.

Durch die Anordnung der Sensorzellen und Wahl der Sensoroptiken derart, dass sich die Erfassungsbereiche der Bildsensoren benachbarter Sensorzellen überlappen, kann für die Aufnahme einer Bildszene eine geringe Gegenstandsweite bei gleichzeitig großer Tiefenschärfe erreicht werden. Die geringe Gegenstandsweite führt zu einem geringen Bedarf an Bauraum. Hieraus resultieren Vorteile für die Integration in Maschinen und Anlagen, die nun nachgerüstet werden können oder die neu gebaut werden. Beispielsweise ist die erfindungsgemäße Bildsensoranordnung nachträglich in Maschinen integrierbar, in deren Bauraum konventionelle IBV-Systeme nicht hineinpassen. Weiterhin lässt sich bei Einsatz der Bildsensoranordnung die Maschinengröße reduzieren, was bei dem Neubau einer Maschine unmittelbare Wettbewerbsvorteile mit sich bringt.

Erfindungsgemäß bilden die Vielzahl gleichartiger Sensorelemente räumlich und funktional eine zusammengehörige Einheit, mittels derer eine zusammenhängende Bildszene erfasst werden kann. Hierfür sind die Sensorzellen in zumindest einer Reihe angeordnet. In dieser Konstellation bildet die Bildsensoranordnung ein eindimensionales Sensorcluster, das im industriellen Umfeld besonders zur Erfassung von Bandwaren geeignet ist. Dabei sind benachbarte Sensorzellen über die Datenschnittstelle elektrisch miteinander verbunden. In einer Reihe weisen die endseitigen Sensorzellen dann einen unmittelbaren Nachbarn und damit mindestens eine Datenschnittstelle auf, wohingegen die übrigen Sensorzellen jeweils zwei Nachbarn haben, die über jeweils eine Datenschnittstelle elektrisch miteinander kontaktiert sind.

Von besonderer Bedeutung ist dabei, dass benachbarte Sensorzellen einen gemeinsamen Bilderfassungsbereich besitzen, so dass beide denselben Teilbereich der Bildszene erfassen. Aufgrund der unterschiedlichen Perspektiven, kann ein Bildsensor einer der beiden Sensorzellen Szenendetails erfassen, die aus der Perspektive des Bildsensors der anderen Sensorzelle nicht sichtbar sind. Die Auswerteeinheit einer jeden Sensorzelle bedient sich hierzu der Bildinformationen über den gemeinsamen Erfassungsbereich aus dem Bildspeicher der benachbarten Sensorzelle, um die Korrelation der Bilddaten festzustellen, so dass ein stereoskopisches Bild des Erfassungsbereichs erstellbar ist, den zwei benachbarte Sensorzellen gemeinsam erfassen.

Vorzugsweise weist jede Sensorzelle vier Datenschnittstellen auf. Damit können an eine Sensorzelle vier Sensorzellen als Nachbarn angeschlossen werden, so dass eine flächige Sensoranordnung realisiert werden kann. Die Sensorzellen können damit matrixförmig angeordnet sein, so dass die Bildsensoranordnung zweidimensionales Sensorcluster bildet, um eine zweidimensionale Bildszene zu erfassen. Beispielsweise kann eine Bildsensoranordnung mit einer 3x3 Matrix, umfassend neun Bildsensoren in drei Reihen und drei Spalten oder eine 4x4 Matrix umfassend sechzehn Sensorzellen in vier Reihen und vier Spalten gebildet werden. Damit können bevorzugt quadratische Erfassungsbereiche aufgebaut werden. Es sind auch nichtquadratische Erfassungsbereiche beliebig aufbaubar, indem eine n x m matrixförmige Anordnung mit n Zeilen und m Spalten von Sensorzellen gewählt wird, wobei n ungleich m ist.

In ihrer Geometrie kann eine Sensorzelle rechteckig, insbesondere quadratisch ausgeführt sein. Damit kann sie an allen vier Seitenkanten mit jeweils einer weiteren Sensorzelle über die entsprechende Datenschnittstelle verbunden sein. Damit wird ein symmetrischer Aufbau einer Sensorzelle erreicht werden, so dass sich eine einfache Fertigung ergibt.

In einer alternativen Ausbildung der Bildsensoranordnung kann die Geometrie einer Sensorzelle dreieckförmig sein. In dieser Ausführung weist eine Sensorzelle vorzugsweise drei Datenschnittstellen, auf so dass an die drei Seitenkanten jeweils eine Nachbarsensorzelle angeschlossen werden kann.

Vorzugsweise weist die Auswerteeinheit einer Sensorzelle Videoprozessoren auf, deren Anzahl mindestens der Anzahl der unmittelbaren Nachbarn der Sensorzelle entspricht, wobei jeder Videoprozessor einer unmittelbar benachbarten Sensorzelle zugeordnet ist. Jeder Videoprozessor prozessiert dabei autonom die Bilddaten des überlappenden Erfassungsbereichs der Sensorzelle zu der benachbarten Sensorzelle und bedient sich dabei deren Bilddaten. Eine Sensorzelle mit vier unmittelbaren Nachbarn weist entsprechend vier Videoprozessoren auf, von denen jeder unabhängig die Korrelation der Bilddaten bewertet.

Die Bildsensoren sind bevorzugt als CMOS-Sensoren (Complementary Metal Oxide Semiconductor) ausgeführt. Sie werden auch Active Pixel Sensor (APS, dt. aktiver Pixelsensor) genannt und haben den Vorteil, dass jedes Pixels durch Umwandlung von Ladungen in Spannungen separat verarbeitet werden kann. Ein CMOS-Sensor kann damit flexibel ausgelesen werden, indem die einzelnen Pixel direkte adressiert werden. Dabei ist auch ein mehrfaches Auslesen und gleichzeitiges Auslesen mehrerer Pixel möglich. Damit können die Bilddaten bestimmte Regionen des Erfassungsbereichs eines Bildsensors gezielt und einzeln abgerufen werden. Derartige Regionen werden auch "Regions of Interest" (ROI) genannt. So können bei einem Bildsensor gezielt die Bilddaten derjenigen Region seines Erfassungsbereichs ausgelesen werden, die sich mit einer Region des Erfassungsbereichs einer benachbarten Sensorzelle überlappt.

In einer vorteilhaften Weiterbildung der erfindungsgemäßen Bildsensoranordnung sind alle Sensorzellen auf einem gemeinsamen, insbesondere plattenförmigen, Trägerelement ausgebildet. Dies hat den Vorteil, dass eine kompakte Baueinheit für ein IBV-System geschaffen wird, die leicht und schnell montiert werden kann. Im Vergleich dazu ist die Integration von konventionellen Muiti-Kamera-IBV-Systemen gekennzeichnet durch langwierige Arbeiten zur Montage und Justage der Systeme. Eine Bildsensoranordnung gemäß der vorliegenden Erfindung kann hingegen werkseitig vormontiert und justiert in eine Produktionsanlage integriert werden, so dass Stillstandzeiten der Anlage reduziert werden.

Insbesondere wird mit der gemeinsamen Anordnung aller Sensorzellen auf einem Trägerelement die Möglichkeit geschaffen, mehrere Bilderfassungseinrichtungen modulartig zusammenzuschalten, d.h. mechanisch und funktional zu verbinden. Das Trägerelement kann beispielsweise eine Leiterplatte sein. Dabei kann beispielsweise eine Anordnung von 3x3 oder 4x4 Sensorzellen auf der leiterplatte montier sein. Aus Platzgründen ist es vorteilhaft, die Bildspeicher und/ oder die Auswerteeinheiten auf der Rückseite des Trägerelements zu montieren. Damit kann auf der Vorderseite, d.h. auf der der zu erfassenden Bildszene zugewandten Seite, die Montage der Bildsensoren, Objektivhalter und der Sensoroptiken erfolgen. Durch die gemeinsame Montage sämtlicher Komponenten auf einem Trägerelement, insbesondere einer Leiterplatte werden die Signalleitungen minimal gehalten, dass eine hohe Datentransferrate erreichbar ist. Dies ist für eine Echtzeitübertragung von Bilddaten Voraussetzung.

Die Auswerteeinheiten sind vorzugsweise durch programmierbare, bzw. in der konkreten Applikation programmierte Logikbausteine gebildet. Dabei können beispielsweise so genannte FPGAs (Field Programmable Gate Array) oder ASICs (Application Specific Integrated Circuit) verwendet sein bzw. werden. Diese haben den Vorteil, dass sie die Bilddaten besonders schnell prozessieren können, so dass eine Echtzeitverarbeitung der Bilddaten erreichbar ist.

Für die Übertragung der Bilddaten und/ oder anderer Steuerdaten zwischen den benachbarten Sensorzellen können die Auswerteeinheiten über die Datenschnittstellen miteinander in Reihe geschaltet sein. Vorzugsweise sind die Auswerteeinheiten über einen oder mehrere bitserielle Datenkanäle miteinander verbunden, so dass eine hohe Datenübertragungsrate gewährleistet ist.

Wie bereits erwähnt, kann die erfindungsgemäße Bildsensoranordnung mit einer oder mehreren weiteren Bildsensoranordnungen der vorbeschriebenen Art zu einer großen Bildsensoranordnung modulartig verbunden werden. Damit ist eine Skalierung des Gesamterfassungsbereichs der Bildsensoranordnung möglich. Die Bildsensoranordnung kann damit an die Größe einer zu erfassenden Bildszene individuell angepasst werden. Beispielsweise können damit planare, aber auch sphärische oder sogar zylindrische Sensorcluster aufgebaut werden. So eignet sich beispielsweise eine sphärische, konkave Bildsensoranordnung für den Einsatz in der Medizin, insbesondere der Chirurgie, beispielsweise zur Überwachung eines operativen Eingriffs. Eine clusterartig gebildete Sensoranordnung kann damit einen großen Messbereich mit hoher Auflösung erfassen ohne dass eine mechanische Verfahreinheit erforderlich ist. Hieraus resultiert für den Anwender ein Vorteil durch geringere Wartung, weniger Verschleißteile und höhere Messrate. Die Szenenauflösung und zugleich die Systemrechenleistung sind skalierbar.

In konventionellen Multi-Kamera-IBV-Systemen ist bei Ausfall einer Kamera ein Austausch sehr aufwendig und wegen der komplexen Justage bzw. Kalibrierung nur durch Fachpersonal möglich. Bei einer erfindungsgemäßen Anordnung mehrerer einzelner Bildsensoranordnungen kann eine solche einzelne Anordnung, ein so genannter Cluster, ausgetauscht und die Reparatur und Kalibrierung werkseitig durchgeführt werden. Fällt ein Sensor durch einen Defekt aus, können benachbarte Sensoren (bei reduzierter Auflösung) die Aufgaben übernehmen.

Zur Ausbildung einer großflächigen Bildsensoranordnung kann das Trägerelement formschlüssig mit zumindest einem Trägerelement einer weiteren Bildsensoranordnung verbunden sein. Die Datenverbindung zwischen einer ersten Bildsensoreinheit und einer weiteren Bildsensoranordnungen kann bevorzugt über die Datenschnittstellen der peripheren Sensorzellen erfolgen, die im nichtverbundenen Zustand einer Bildsensoranordnung keine nächsten Nachbarn haben. Dabei können diese aber auch die übrigen Datenschnittstellen jeweils durch einen Steckkontakt, einen Lötkontakt oder eine Lötbrücke gebildet sein. Mittels eines Steckkontaktes wird neben der elektrischen Kontaktierung zusätzlich eine mechanische Verbindung zwischen zwei Sensorzellen erreicht, die im Bedarfsfall schnell und einfach wieder entfernt werden kann. Bei einem Lötkontakt kann über ein Flachbandkabel eine dauerhafte Verbindung zwischen den Sensorzellen etabliert werden. Lötkontakte haben den Vorteil, dass keine Korrosion und damit ohmsche Kontaktwiderstände an den Kontaktierbereichen vorliegen, die die Übertragungsqualität mindern.

Vorzugsweise kann eine der Sensorzellen einen Controller aufweisen, über den die Auswerteeinheiten mit einem externen Rechner verbindbar sind. Der Controller bildet damit die Schnittstelle zu einer zentralen Rechnereinheit und ist vorzugsweise in die Reihenschaltung der Auswerteeinheiten integriert. Durch eine einzige Datenschnittsteile nach außen ist eine preiswerte Adaption der Bildsensoranordnung an die Steuerungssysteme des Anwenders gewährleistet.

Weitere Merkmale und Vorteile der Erfindung werden anhand der nachfolgenden Beschreibung von Ausführungsbeispielen und der beigefügten Zeichnungen näher erläutert. Es zeigen:
- Figur 1:: Konventionelles Bildverarbeitungssystem zur Vermessung eines Objektes
- Figur 2:: Vergleich einer konventionellen Kamera mit der erfindungsgemäßen Bildsensoranordnung
- Figur 3:: Zweidimensionale Bildsensoranordnung in perspektivischer Ansicht mit überlagerten Bilderfassungsbereichen der Bildsensoren
- Figur 4a:: visuelle Sensorzelle der Bildsensoranordnung
- Figur 4b:: visuelle Sensorzelle der Bildsensoranordnung mit Datenschnittstellen
- Figur 5:: Eindimensionale Bildsensoranordnung als Kette von Sensorzellen
- Figur 6:: Zweidimensionale Bildsensoranordnung mit matrixförmiger Anordnung von 3x3 Sensorzellen
- Figur 7:: Zweidimensionale Bildsensoranordnung mit matrixförmiger Anordnung von 4x4 Sensorzellen
- Figur 8:: Sensorcluster mit 4x4 Bildsensoranordnungen aus 3x3 Sensorzellen
- Figur 9:: Bildsensoranordnung mit Interfacekarte
- Figur 10:: Schematische Darstellung der modulartigen Verbindung mehrerer Bildsensoranordnungen zu einem zweidimensionalen Sensorcluster
- Figur 11:: Zweidimensionales Sensorcluster mit neun Bildsensoranordnungen aus 3x3 Sensorzellen in perspektivischer Ansicht

Figur 1 zeigte eine Anordnung eines elementaren industriellen Bilderarbeitungssystems nach dem Stand der Technik. Dabei ist eine Kamera 100 mit einem PC 140 verbunden. Die Kamera 100 besitzt einen Sichtbereich 110, nachfolgend auch Erfassungsbereich genannt, Innerhalb welchem ein Prüfobjekt 120, insbesondere ein Werkstück angeordnet ist, dessen Oberfläche die aufzunehmende Gegenstandebene 130 bildet. Die Kamera zeichnet eine Bildszene auf, in der das Werkstück 120 auf Vollständigkeit und/ oder Maßhaltigkeit überprüft wird.

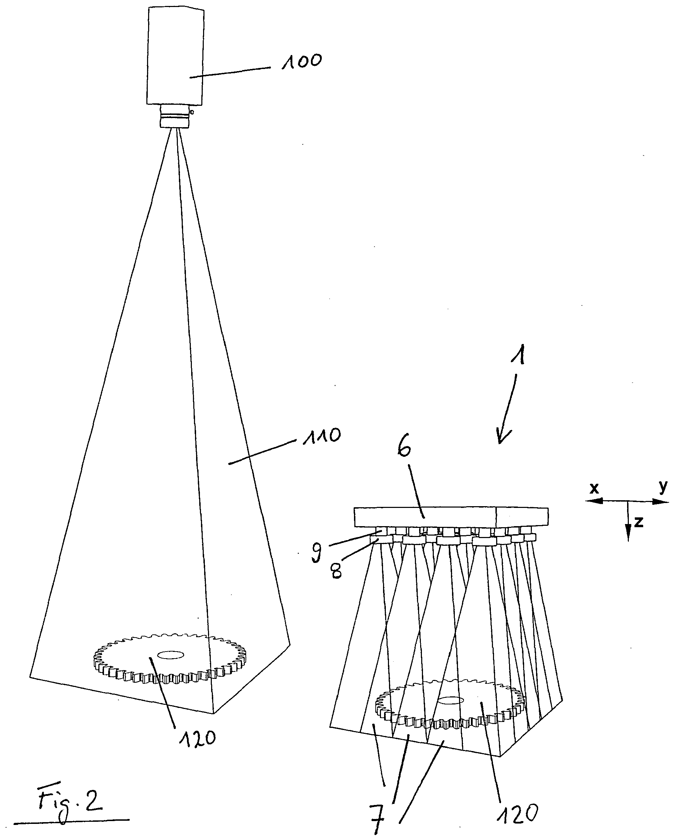

Figur 2 veranschaulicht den Vergleich einer konventionellen Kamera 100 mit einer erfindungsgemäßen Bildsensoranordnung 1 als zweidimensionales Sensorcluster zur visuellen Aufnahme eines Objektes 120. Die sich überschneidenden Sichtbereiche 7 von benachbarten Bildsensoren 3, denen jeweils eine Sensoroptik 9 mit Objektivhalterung 9 zugeordnet ist und die gemeinsam auf einem Trägerelement 6angeordnet sind, führen in einem 2D-Sensorcluster 1 zu zusätzlichen Szeneninformationen, über welche eine konventionelle Kamera 100 nicht verfügen kann. Die Bildsensoranordnung ist signalkompatibel zu konventionellen Kameras 100, so dass optional Hardware und Software einer IBV-Signalverarbeitungskette verwendet werden können. Für diese Aufgabe ist ein Interface vorgesehen, welches die Bildsensoranordnung an eine typische IBV-Datenschnittstelle, wie z.B. CameraLink, ankoppelt und nachfolgend Clustercontroller genannt wird.

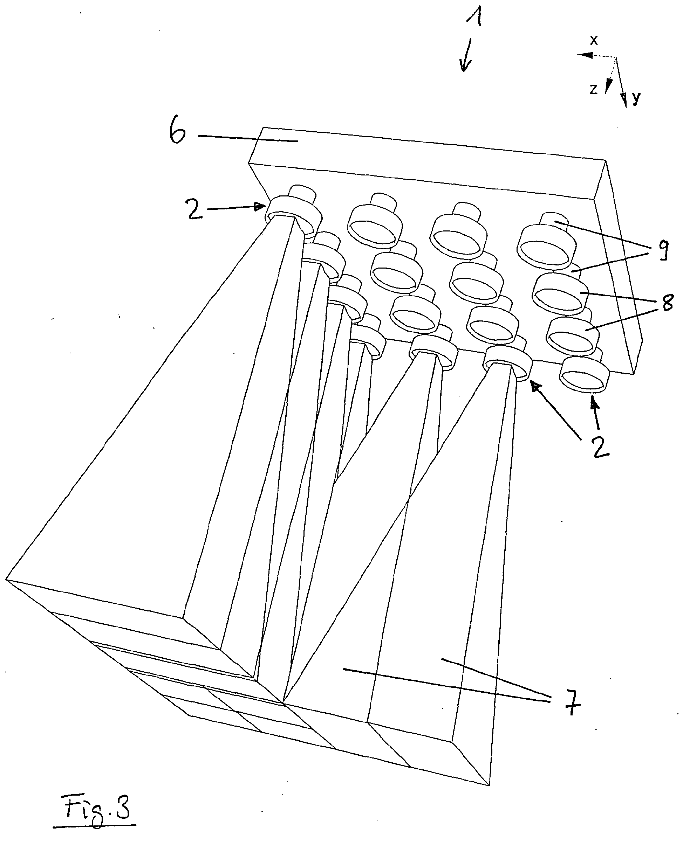

Figur 3 zeigt eine erfindungsgemäße Bildsensoranordnung 1 in perspektivischer Sicht mit angedeuteten Sichtbereichen 7, die sich bei benachbarten Sensorzellen 2 überlappen. Die Bildsensoranordnung bildet eine IBV-Komponente, die in einem zweidimensionalen Feld Bildsensoren 3 und die entsprechenden Linsenpakete, bestehend aus Sensoroptik 8 und Objektivträger 9, als kompaktes Modul zusammenfasst, und einen neuartigen Baustein zum Aufbau von IBV-Systemen ermöglicht. Jedem Bildsensor 3 ist dabei eine Sensoroptik 8 zugeordnet, die auf einem Objektivträger 9 montiert ist. Die Objektivträger 9 aller Sensorzellen 2 sind mitsamt der nicht dargestellten Bildsensoren 3 gemeinsam auf einem Trägerelement 6 montiert. Die Bildsensoranordnung 1 bildet ein Modul, das mit weiteren Modulen verbindbar ist. In diesem Modul sind 4x4, d.h. sechzehn Bildsensoren 3 integriert und mit Auswerteeinheiten 4 in gestalt digitaler Logik ausgestattet, sodass Module beliebig und lückenlos aneinandergefügt werden können und hierdurch beliebig große Sensorcluster aufgebaut werden können. Die kleinste Systemgröße zur Lösung einer Bildverarbeitungsaufgabe umfasst jedoch eine Bildsensoranordnung 1, wie sie in Figur 3 dargestellt ist. Je größer die Anzahl der verwendeten Module, umso größer ist der Messbereich. Die Auflösung ist zudem von der Packungsdichte der Sensorzellen 2 abhängig. Die Sichtbereiche 7 der Bildsensoren 3 sind in der Gegenstandsebene gemäß Figur 3 überlagert. Jeder Bildpunkt in der zu Szene wird von mindestens vier Bildsensoren 3 erfasst, wodurch Algorithmen zu Datenfusion angewendet werden können und stereoskopische Verfahren zur 3D-Bildanalyse nutzbar sind. Zur Vollständigkeitskontrolle von Prüfobjekten, zum Beispiel eine Schweißnaht oder Lötstelle, kann zum Beispiel ein 2D-Sensorcluster gemäß Figur 3 eine Fehlstelle ermitteln, die von einer einzelnen konventionellen Kamera 100 nicht abbildbar ist.

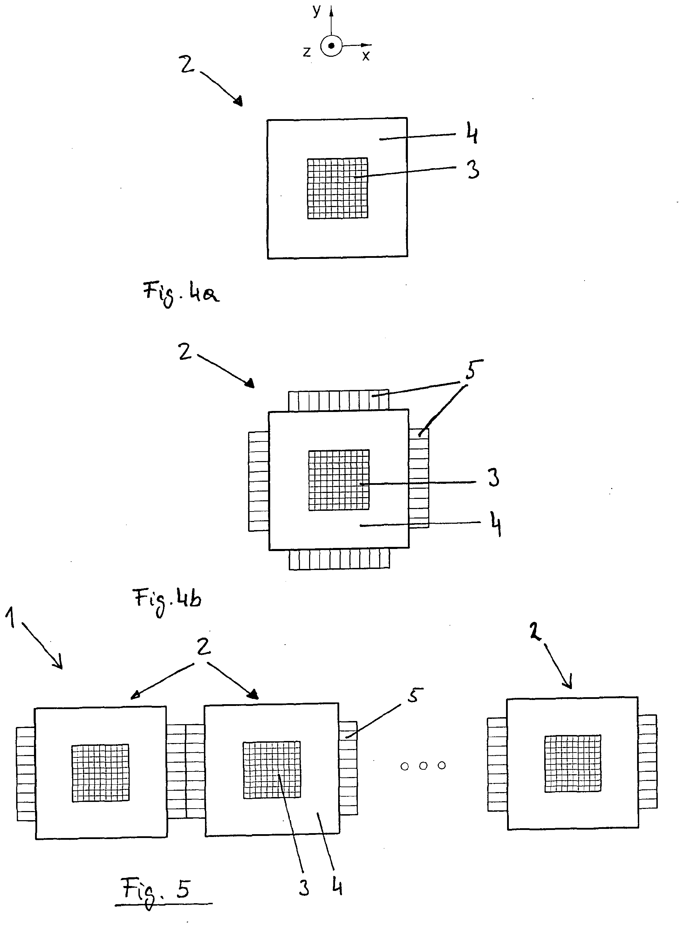

Figur 4a zeigt eine schematische Darstellung einer visuellen Sensorzelle 2. Sie umfasst einen Bildsensor 3 in CMOS-Technik, der eine Vielzahl auslesbarer Pixel aufweist. Der handelsübliche CMOS-Bildsensor 3 liefert bei einer Grauwertquantisierung von 10 Bit pro Pixel einen Datenstrom von ca. 250 MBit/s. Der CMOS-Bildsensor 3 zeichnet sich durch einen großen Temperaturbereich aus. Weiterhin weist die Sensorzelle eine Auswerteeinheit 4 auf, die in einer Hardwarelogik in einem FPGA implementiert ist. Weiterhin umfasst sie einen nicht dargestellten Bildspeicher. Die Auswerteeinheit 4 umfasst wiederum fünf Videoprozessoren als programmierbare Logikbausteine, in denen jeweils gleichzeitig mehrere Prozesse, wie Objektfindung, Objektvermessung, usw. parallel ablaufen. Das heißt, dass auf den Videostrom eines Bildsensors 3 in Echtzeit parallel mehrere Algorithmen angewendet werden.

In Figur 4b ist die Sensorzelle 2 mit vier Datenschnittstellen 5 abgebildet, die auch als "Daten Links" bezeichnet werden können. Diese können räumlich vier Kanten der Sensorzelle definieren, an denen weitere vier Sensorzellen 2 ansetzbar sind. Dabei erfolgt über die Datenschnittstellen 5 eine elektrische Verbindung zwischen benachbarten Sensorzellen 2. Über jede Datenschnittstelle 5 werden die Auswerteeinheiten 4 unmittelbar benachbarter Sensorzellen 2 miteinander durch mehrere bitserielle Datenkanäle verbunden. Die Datenschnittstellen 5 realisieren den kürzest möglichen Übertragungsweg für den Datenaustausch zwischen zwei Sensorzellen 2. Sie bilden das technische Fundament der Multi-Sensor-Architektur.

Figur 5 zeigt eine Bildsensoranordnung 1 mit einer Vielzahl Sensorzellen 2, die in nur einer Reihe zusammengeschlossen sind. Dabei sind lediglich die ersten beiden und die letzte Sensorzelle 2 der Reihe abgebildet. Beispielsweise können auf diese Weise 5, 10, 20 oder auch 80, 100 oder mehr derartiger Sensorzellen 2 zusammengeschlossen sein und die Bildsensoranordnung bilden. Sie stellt damit ein eindimensionales Sensorcluster dar. Jeder Bildspeicher einer Sensorzelle 2 kann von jedem an den Zellenkanten benachbarten Sensorzellen 2 zeitgleich ausgewertet werden. Eine Reihe von 80 Sensorzellen 2 erzeugt beispielsweise Bilddaten mit einer Gesamtdatenrate von 20 Gigabit pro Sekunde, die in den Videoprozessoren vorverarbeitet werden. Ein derartiger 1D-Sensorcluster mit 80 Sensorzellen besitzt eine Länge von 1600 mm und eignet sich zum Beispiel zur Inspektion bandförmiger Materialien. Dabei wird die immense Datenmenge von 80 Bildsensoren mit je 250 MBit/s und 80 Videoprozessoren in Echtzeit verarbeitet und verknüpfen bzw. bildtechnisch ausgewertet, indem die Korrelation der Bilddaten aus dem überlappenden Erfassungsbereichen 7 benachbarter Sensorzellen bestimmt wird. Die Auswertung der Bilddaten durch die in Hardwarelogik implementierten Videoprozessoren erfolgt durch Anwendung einer programmierten Korrelationsfunktion, mittels derer die Korrelation der Bilddaten bestimmt wird. Die Korrelation ist dabei ein Maß, das angibt, wie stark Bildelemente miteinander verwandt sind. Anhand der Korrelation wird eine dem vermessenen Objekt 120 oder Detail eines Objekts zugehörige Positionsinformation abgeleitet. Aus dieser kann wiederum eine Aussage über die Geometrie, d.h. die Länge, Breite und Höhe des vermessenen Objekts gegeben werden. Aus einem Vergleich dieser ermittelten Geometriewerte mit vorgegebenen Werten können Abweichungen und damit die Qualität des Objekts beurteilt werden.

Mit Methoden der multisensoriellen Datenfusion werden somit die Bilddaten benachbarter Sensorzellen 2 kombiniert. Aus den fusionierten Bildinformationen werden im Vergleich zur Verarbeitung von einzelnen Bildszenen weitere Schlussfolgerungen über physikalische Ereignisse, Aktivitäten oder Situationen gezogen. Methoden der Datenfusion sind komplex und eine Mischung mathematischer und heuristischer Techniken aus den Gebieten der Statistik, der künstlichen Intelligenz, der digitalen Signalverarbeitung und der Entscheidungstheorie. Im 1D-Sensorcluster wird die Datenfusion dadurch realisiert, dass für jeden Messpunkt vier Bildsensoren ausgewertet werden und hierdurch robustere Messwerte erzeugt werden. Die Auswertung findet unmittelbar hinter den Bildsensoren 3 im Datenstrom zum Videoprozessor statt.

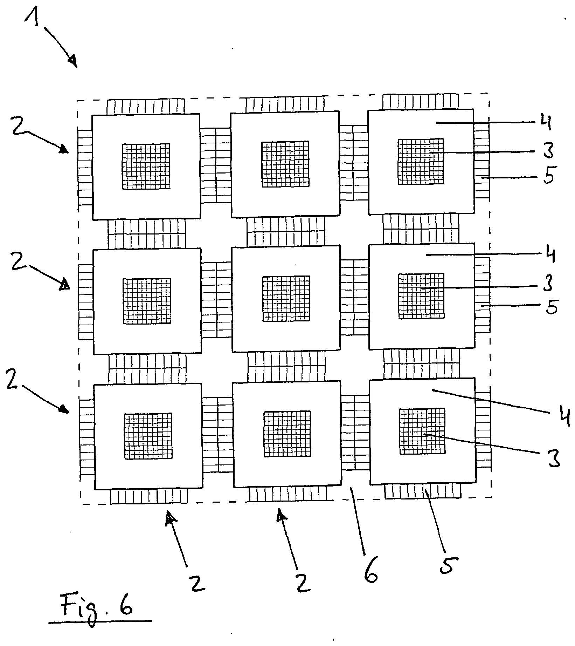

Figur 6 zeigt eine matrixförmige Anordnung von neun Sensorzellen 2 in einer Bildsensoranordnung 1, mit drei Reihen und drei Spalten. Dabei sind neun Bildsensoren 3, neun Miniaturobjektive und neun Auswerteeinheiten 4 sowie zwölf externe Datenschnittstellen 5 zu Nachbarmodulen vorhanden. Die Bildsensoren 3 der Sensorzellen 2 sind äquidistant auf einer Trägerplatte 6 angeordnet. Alle Sensorzellen 2 sind identisch ausgeführt. Unmittelbar benachbarte Sensorzellen sind über jeweils eine Datenschnittstelle miteinander verbunden, so dass die Auswerteeinheiten 4 der Sensorzellen auf die Bildspeicher der jeweiligen Nachbarsensorzellen 2 zugreifen können.

Jedem Bildsensor 3 ist eine Auswertelogik 4 zugeordnet, die genau einen physikalischen Bildspeicher besitzt. Jede Auswertelogik 4 eines Sensors 3 kann zudem auf den Bildspeicher des Nachbarn zugreifen. Dabei greift eine Auswertelogik 4 immer nur auf einen Teil des Nachbarbildspeichers zu, die so genannte "Region of Interest"(ROI). Die Auswertelogik (4) jedes Bildsensors 3 besteht aus einem zentralen Videoprozessor und vier ROI-Videoprozessoren, die jeweils autonom die ROI des eigenen Bildsensors 3 und des relevanten Nachbarn bearbeiten. Diese Prozesse laufen zeitgleich, d.h. parallel ab.

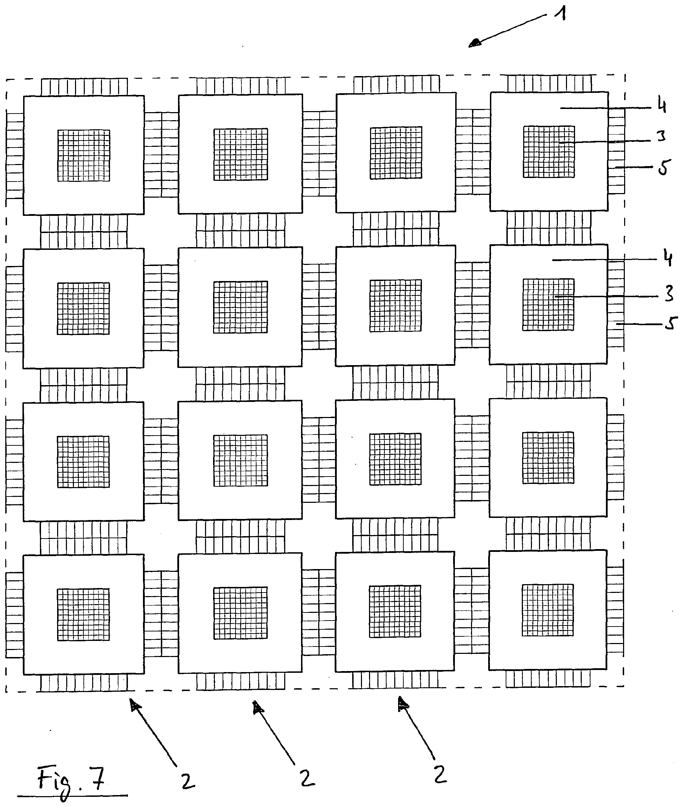

Figur 7 zeigt eine matrixförmige Anordnung von sechzehn Sensorzellen 2 in einer Bildsensoranordnung 1, mit vier Reihen und vier Spalten. Dabei sind sechzehn Bildsensore 3, sechzehn Miniaturobjektive und sechzehn Auswerteeinheiten 4 sowie sechzehn externe Datenschnittstellen 5 zu Nachbarmodulen vorhanden. Im Übrigen entspricht die Anordnung derjenigen gemäß Figur 6. Die Baugröße der Trägerplatte 6 ist 80 x 80 x 20mm³.

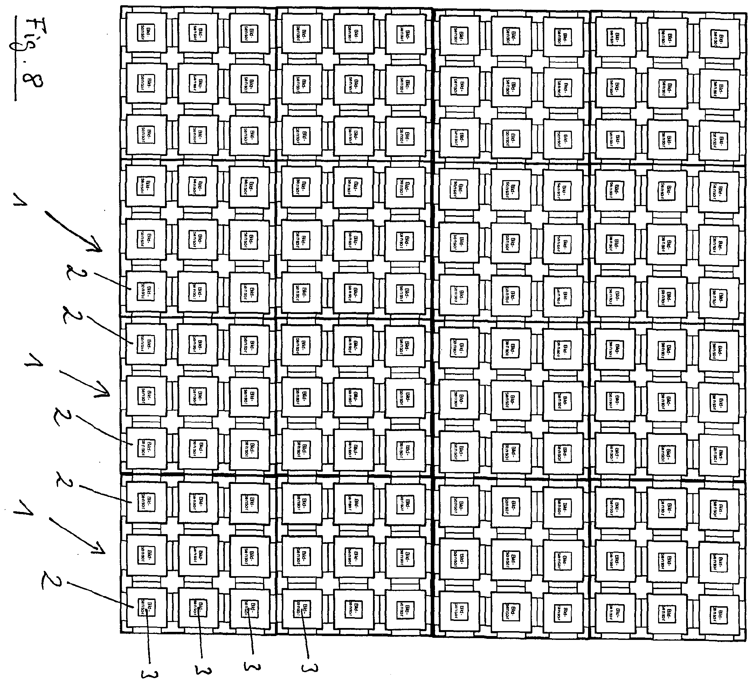

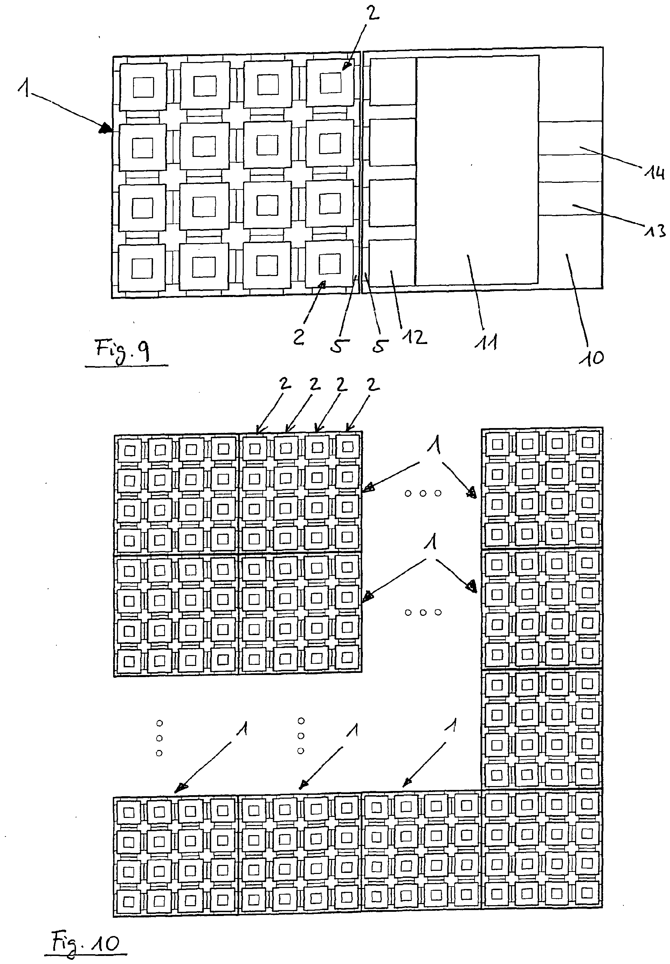

Figur 8 zeigt ein zweidimensionales Sensorcluster aus 4x4 Bildsensoranordnungen 1 gemäß Figur 6, die jeweils 3x3 Sensorzellen besitzen. Auf diese Weise sind 144 Bildsensoren 3 zu einem Sensorcluster mit großem Erfassungsbereich zusammengefasst. Figur 10 veranschaulicht die modulartige Anordnung von beliebig vielen Bildsensoranordnungen 1 pro Zeile und Reihe zum Erhalt eines nxm Sensorclusters mit n Zeilen und m Spalten. Dabei kann eine symmetrische für n=m oder auch eine asymmetrische Anordnung für n ≠ m aufgebaut werden. Die einzelnen "Kacheln" umfassen jeweils 4x4 Sensorzellen 2.

Der Übergang von einer Kachel zur Nächsten besitzt dieselbe Datenkanalstruktur (Data-Link), wie Verbindungen zwischen den Sensorzellen 2 auf einer Kachel untereinander. Von einem physikalischen Kachelübergang "merken" die jeweiligen Videoprozessoren nichts und müssen darauf auch keine Rücksicht nehmen. Lediglich am Rand eines Sensorclusters, d.h. an den äußeren Rändern der äußeren Kacheln eines aus mehreren Kacheln aufgebauten Sensorclusters, wird der jeweilige zentrale Videoprozessor feststellen, dass eine Kommunikation nicht mit vier Nachbarn sondern nur mit drei (an der äußeren Kachelkante) oder mit zwei Nachbarn (an der äußeren Kachelecke) aufgebaut werden kann. Entsprechend werden auch nur die verfügbaren überlappenden ROI ausgewertet.

Für den Anwender entsteht damit die Restriktion, dass eine Bildszene nur so groß sein darf, dass die Bildszene nicht über den Mittelpunkt der äußeren Bildsensoren eines Cluster hinausragt. Dies bedeutet, dass bei der Dimensionierung eines Sensorclusters der Anwender stets so viele Kacheln zusammenschalten muss, dass der Messerfisch bzw. die Bildszene vollständig umfasst wird. Andernfalls kommt es an den Rändern insbesondere an den Ecken eines Clusters zu Informationsdefiziten, die trotz Redundanz der ROI zu einem Qualitätsverlust der Bildinformationen führen.

In Figur 9 ist die Verbindung einer Bildsensoreinheit 1 mit einer Interfacekarte 10 dargestellt, die eine Schnittstelle 11 zu einem verarbeitenden PC realisierte. Dabei ist ein TCP/IP-Anschluss 13 zur Anbindung der Bildsensoranordnung an ein Netzwerk und ein Camera-Link Anschluss 14 zum direkten Anschluss der Sensoranordnung an den PC vorgesehen. Die Verbindung zu den angrenzenden Randsensorzellen 2 erfolgt über Datenschnittstellen 5, wie sie auch zwischen den Sensorzellen 2 der Bildsensoranordnung 1 realisieret sind. Hardwarelogiken 12 steuern die Datenübertragung zur Schnittstelle 11.

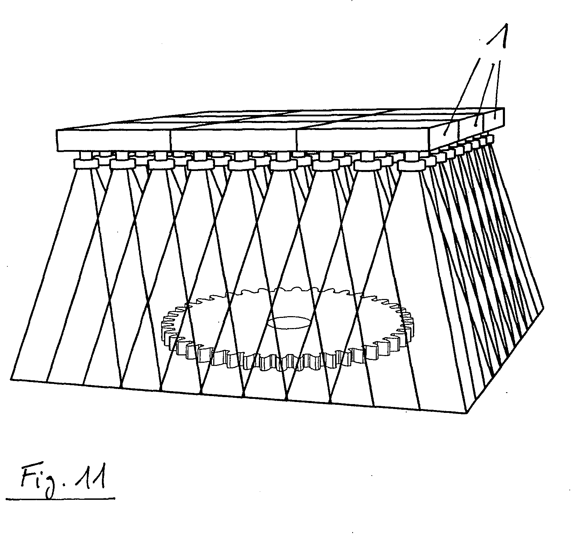

Figur 11 zeigt ein zweidimensionales Sensorcluster aus neun Bildsensoranordnungen, matrixförmig angeordnet in drei Reihen und drei Spalten, wobei jede Bildsensoranordnung neun Sensorzellen umfasst, die ebenfalls in drei Reihen und drei Spalten angeordnet sind. Ein Sensorcluster kann aus nahezu beliebig vielen modulartig zusammengesetzten Bildsensoranordnungen, nachfolgend auch Kacheln oder Module genannt, bestehen. Jedes Modul enthält gemäß Figur 11 eine definierte Anzahl von Sensorzellen 2, die jeweils einen Ausschnitt der Bildszene auswerten. Jeder Bildpunkt der Szene wird von mindestens zwei benachbarten Sensorzellen 2 erfasst und ausgewertet. Typisch sind die Bildsensoren 3 in einer rechteckförmigen Matrize angeordnet. Zur Erhöhung der Packungsdichte können die Sensorelemente 2 auch wabenförmig angeordnet sein.

In einer nicht dargestellten Ausführungsvariante der Erfindung können zwischen den Sensoren 3 HB-LEDs (High Brightness Light Emitting Diode) integriert sein, die für partielle und richtungsabhängige Beleuchtung der Szene sorgen.

Die erfindungsgemäße Bildsensoranordnung kann universell in der technischen Bildverarbeitung eingesetzt werden. Die Sensoranordnung zeichnet sich durch eine hohe Szenenauflösung, geringen Bauraum, hohe Abbildungsleistung und hohe Rechenleistung aus. Durch diese Kenndaten lassen sich eine Vielzahl neuer Applikationen zur Lösung technischer Aufgabenstellungen ableiten und dem Anwender wirtschaftliche Vorteile verschaffen. Produktionsanlagen, die bisher nicht mit industrieller Bildverarbeitung ausrüstbar waren, können nun ausgerüstet und nachgerüstet werden.

Die erfindungsgemäße Bildsensoranordnung 1 birgt auch das Potenzial, die 3D-Welt industrieller Szenen zu erfassen. Benachbarte Bildsensoren 3 können Objektdetails aus unterschiedlichen Blickwinkeln betrachten und somit neben der xy-Geometrie auch Informationen aus der z-Achse gewinnen.

## Patentansprüche

1. Bildsensoranordnung (1) zur Erfassung von Bildinformationen für die automatische Bilddatenverarbeitung mit einer Vielzahl gleichartiger Sensorzellen (2), die jeweils einen Bildsensor (3) mit einer eigenen Sensoroptik (8), einen Bildspeicher zur Speicherung von Bildinformationen des Bildsensors (3) und eine Auswerteeinheit (4) zur Verarbeitung der Bildinformationen aufweisen, wobei die Sensorzellen (2) in zumindest einer Reihe derart angeordnet sind, dass sich die Erfassungsbereiche (7) der Bildsensoren (3) unmittelbar benachbarter Sensorzellen (2) überlappen, **dadurch gekennzeichnet, dass** jede Sensorzelle (2) mindestens eine Datenschnittstelle (5) zu einer benachbarten Sensorzelle (2) aufweist und dazu eingerichtet ist, über die entsprechende Datenschnittstelle (5) auf die Bilddaten des überlappenden Erfassungsbereichs (7) der benachbarten Sensorzelle (2) zuzugreifen, wobei die Auswerteeinheiten (4) jeweils dazu eingerichtet sind, eine Korrelation dieser Bilddaten zu bestimmen.

2. Bildsensoranordnung (1) nach Anspruch 1, **dadurch gekennzeichnet, dass** jede Sensorzelle (2) vier Datenschnittstellen (5) aufweist, so dass zur Realisierung einer flächigen Sensoranordnung an eine Sensorzelle (2) vier Sensorzellen (2) als Nachbarn anschließbar sind.

3. Bildsensoranordnung (1) nach Anspruch 1 oder 2, **dadurch gekennzeichnet, dass** die Auswerteeinheit (4) einer Sensorzelle (2) mindestens vier Videoprozessoren aufweist, wobei jeder Videoprozessor autonom die Bilddaten des überlappenden Erfassungsbereichs (7) zu einer benachbarten Sensorzelle (2) prozessiert.

4. Bildsensoranordnung nach einem der vorherigen Ansprüche, **dadurch gekennzeichnet, dass** die Sensorzellen (2) matrixförmig angeordnet sind.

5. Bildsensoranordnung (1) nach Anspruch 4, **dadurch gekennzeichnet, dass** sechzehn Sensorzellen (2) äquidistant in vier Reihen und vier Spalten angeordnet sind.

6. Bildsensoranordnung (1) nach einem der vorherigen Ansprüche, **dadurch gekennzeichnet, dass** die Bildsensoren (3) CMOS-Sensoren sind.

7. Bildsensoranordnung (1) nach einem der vorherigen Ansprüche, **dadurch gekennzeichnet, dass** die Sensorzellen (2) auf einem gemeinsamen, insbesondere plattenförmigen, Trägerelement (6) ausgebildet sind.

8. Bildsensoranordnung nach Anspruch 7, **dadurch gekennzeichnet, dass** das Trägerelement (6) eine Leiterplatte ist.

9. Bildsensoranordnung (1) nach Anspruch 7 oder 8, **dadurch gekennzeichnet, dass** die Bildspeicher und/ oder die Auswerteeinheiten (4) auf der Rückseite des Trägerelements (6) montiert sind.

10. Bildsensoranordnung (1) nach einem der vorherigen Ansprüche, **dadurch gekennzeichnet, dass** die Auswerteeinheiten (4) jeweils durch einen programmierbaren Logikbaustein gebildet sind.

11. Bildsensoranordnung (1) nach einem der vorherigen Ansprüche, **dadurch gekennzeichnet, dass** die Auswerteeinheiten (4) über die Datenschnittstellen (5) miteinander in Reihe geschaltet sind

12. Bildsensoranordnung (1) nach einem der vorherigen Ansprüche, **dadurch gekennzeichnet, dass** die Auswerteeinheiten (4) über einen oder mehrere bitserielle Datenkanäle miteinander verbunden sind.

13. Bildsensoranordnung (1) nach einem der vorherigen Ansprüche, **dadurch gekennzeichnet, dass** sie mit zumindest einer weiteren Bildsensoranordnung (1), insbesondere einer Vielzahl weitere Bildsensoranordnungen (1) nach einem der vorherigen Ansprüche modulartig verbunden ist.

14. Bildsensoranordnung (1) nach Anspruch 13, **dadurch gekennzeichnet, dass** das Trägerelement (6) formschlüssig mit zumindest einem Trägerelement (6) einer weiteren Bildsensoranordnung (1) verbunden ist.

15. Bildsensoranordnung (1) nach Anspruch 13 oder 14, **dadurch gekennzeichnet, dass** die Datenverbindung zwischen ihr und einer weiteren Bildsensoranordnung (1) über die Datenschnittstellen (5) der peripheren Sensorzellen (2) erfolgt.

16. Bildsensoranordnung (1) nach einem der vorherigen Ansprüche, **dadurch gekennzeichnet, dass** die Datenschnittstellen (5) jeweils durch einen Steckkontakt, einen Lötkontakt oder eine Lötbrücke gebildet sind.

17. Bildsensoranordnung (1) nach einem der vorherigen Ansprüche, **dadurch gekennzeichnet, dass** eine der Sensorzellen (2) einen Controller aufweist, über den die Auswerteeinheiten (4) mit einem externen Rechner verbindbar sind.

18. Verfahren zur Erfassung von Bildinformationen für die automatische Bilddatenverarbeitung mittels einer Bildsensoranordnung (1) nach einem der Ansprüche 1 bis 17, bei dem jeder Bildsensor (3) der Sensorzellen (2) einen Teilbereich einer Gegenstandsebene erfasst und die Bilddaten in dem Bildspeicher der jeweiligen Sensorzelle (2) speichert, wobei sich die Erfassungsbereiche (7) der Bildsensoren (3) unmittelbar benachbarter Sensorzellen (2) überlappen, **dadurch gekennzeichnet, dass** die Sensorzellen (2) über ihre Datenschnittstellen (5) auf die Bilddaten des überlappenden Erfassungsbereichs (7) der benachbarten Sensorzellen (2) zugreifen und die Auswerteeinheiten (4) der Sensorzellen (2) jeweils eine Korrelation dieser Bilddaten bestimmen.

## Claims

1. Image sensor array (1) for capturing image information for automatic image data processing, having a multiplicity of identical sensor cells (2), which respectively have an image sensor (3) with a dedicated sensor optical system (8), a frame buffer for storing image information from the image sensor (3), and an evaluation unit (4) for processing the image information, the sensor cells (2) being arranged in at least one row such that the capture regions (7) of the image sensors (3) of directly adjacent sensor cells (2) overlap, **characterized in that** each sensor cell (2) has at least one data interface (5) to an adjacent sensor cell (2) and is configured to access the image data of the overlapping capture region (7) of the adjacent sensor cell (2) via the corresponding data interface (5), with the evaluation units (4) respectively being configured to determine a correlation of these items of image data.

2. Image sensor array (1) according to Claim 1, **characterized in that** each sensor cell (2) has four data interfaces (5) so that four sensor cells (2) can be connected as neighbors to one sensor cell (2) in order to implement a two-dimensional sensor array.

3. Image sensor array (1) according to Claim 1 or 2, **characterized in that** the evaluation unit (4) of a sensor cell (2) has at least four video processors, with each video processor autonomously processing the image data from the overlapping capture region (7) to an adjacent sensor cell (2).

4. Image sensor array according to one of the preceding claims, **characterized in that** the sensor cells (2) are arranged in a matrix-like manner.

5. Image sensor array (1) according to Claim 4, **characterized in that** sixteen sensor cells (2) are arranged equidistantly in four rows and four columns.

6. Image sensor array (1) according to one of the preceding claims, **characterized in that** the image sensors (3) are CMOS sensors.

7. Image sensor array (1) according to one of the preceding claims, **characterized in that** the sensor cells (2) are formed on a common, more particularly plate-shaped, support element (6).

8. Image sensor array according to Claim 7, **characterized in that** the support element (6) is a printed-circuit board.

9. Image sensor array (1) according to Claim 7 or 8, **characterized in that** the frame buffers and/or the evaluation units (4) are assembled on the rear side of the support element (6).

10. Image sensor array (1) according to one of the preceding claims, **characterized in that** the evaluation units (4) are each made of a programmable logic module.

11. Image sensor array (1) according to one of the preceding claims, **characterized in that** the evaluation units (4) are interconnected in series via the data interfaces (5).

12. Image sensor array (1) according to one of the preceding claims, **characterized in that** the evaluation units (4) are interconnected via one or more bit-serial data channels.

13. Image sensor array (1) according to one of the preceding claims, **characterized in that** it is connected in modular fashion to at least one further image sensor array (1), more particularly to a multiplicity of further image sensor arrays (1) according to one of the preceding claims.

14. Image sensor array (1) according to Claim 13, **characterized in that** the support element (6) is connected to at least one support element (6) of a further image sensor array (1) in an interlocking manner.

15. Image sensor array (1) according to Claim 13 or 14, **characterized in that** the data connection between it and a further image sensor array (1) is established via the data interfaces (5) of the peripheral sensor cells (2).

16. Image sensor array (1) according to one of the preceding claims, **characterized in that** the data interfaces (5) are respectively formed by a plug-in contact, a solder contact or a soldering jumper.

17. Image sensor array (1) according to one of the preceding claims, **characterized in that** one of the sensor cells (2) has a controller, by means of which the evaluation units (4) can be connected to an external computer.

18. Method for capturing image information for automatic image, processing by means of an image sensor array (1) according to one of Claims 1 to 17, **in which** each image sensor (3) of the sensor cells (2) captures a sub-region of an object plane and stores the image data in the frame buffer of the respective sensor cell (2), with the capture regions (7) of the image sensors (3) from directly adjacent sensor cells (2) overlapping, **characterized in that** the sensor cells access the image data of the overlapping capture region (7) from the adjacent sensor cells (2) via their data interfaces (5) and the evaluation units (4) of the sensor cells (2) respectively determine a correlation of these items of image data.

## Revendications

1. Arrangement capteur d'images (1) destiné à acquérir des informations d'image pour le traitement de données d'image automatique, comprenant une pluralité de cellules de capteur (2) identiques, lesquelles possèdent respectivement un capteur d'images (3) ayant une optique de capteur (8) propre, une mémoire d'images destinée à mémoriser des informations d'image du capteur d'images (3) et une unité d'interprétation (4) destinée à traiter les informations d'image, les cellules de capteur (2) étant disposées en au moins une rangée de telle sorte que les zones d'acquisition (7) des capteurs d'images (3) de cellules de capteur (2) directement voisines se chevauchent, **caractérisé en ce que** chaque cellule de capteur (2) possède au moins une interface de données (5) vers une cellule de capteur (2) voisine et est conçue pour accéder, par le biais de l'interface de données (5) correspondante, aux données d'image de la zone d'acquisition (7) en chevauchement de la cellule de capteur (2) voisine, les unités d'interprétation (4) étant respectivement conçues pour déterminer une corrélation de ces données d'image.

2. Arrangement capteur d'images (1) selon la revendication 1, **caractérisé en ce que** chaque cellule de capteur (2) possède quatre interfaces de données (5), de sorte que quatre cellules de capteur (2) peuvent être raccordées à une cellule de capteur (2) en tant que voisines en vue de réaliser un arrangement capteur en surface.

3. Arrangement capteur d'images (1) selon la revendication 1 ou 2, **caractérisé en ce que** l'unité d'interprétation (4) d'une cellule de capteur (2) possède au moins quatre processeurs vidéo, chaque processeur vidéo traitant de manière autonome les données d'image de la zone d'acquisition (7) en chevauchement avec une cellule de capteur (2) voisine.

4. Arrangement capteur d'images selon l'une des revendications précédentes, **caractérisé en ce que** les cellules de capteur (2) sont disposées en forme de matrice.

5. Arrangement capteur d'images (1) selon la revendication 4, **caractérisé en ce que** seize cellules de capteur (2) sont disposées de manière équidistante en quatre lignes et quatre colonnes.

6. Arrangement capteur d'images (1) selon l'une des revendications précédentes, **caractérisé en ce que** les capteurs d'images (3) sont des capteurs CMOS.

7. Arrangement capteur d'images (1) selon l'une des revendications précédentes, **caractérisé en ce que** les cellules de capteur (2) sont configurées sur un élément porteur (6) commun, notamment en forme de plaque.

8. Arrangement capteur d'images selon la revendication 7, **caractérisé en ce que** l'élément porteur (6) est un circuit imprimé.

9. Arrangement capteur d'images (1) selon la revendication 7 ou 8, **caractérisé en ce que** la mémoire d'images et/ou les unités d'interprétation (4) sont montées sur le côté arrière de l'élément porteur (6).

10. Arrangement capteur d'images (1) selon l'une des revendications précédentes, **caractérisé en ce que** les unités d'interprétation (4) sont respectivement formées par un composant logique programmable.

11. Arrangement capteur d'images (1) selon l'une des revendications précédentes, **caractérisé en ce que** les unités d'interprétation (4) sont branchées en séries ensemble par le biais des interfaces de données (5).

12. Arrangement capteur d'images (1) selon l'une des revendications précédentes, **caractérisé en ce que** les unités d'interprétation (4) sont reliées ensemble par le biais d'un ou plusieurs canaux de données bit-série.

13. Arrangement capteur d'images (1) selon l'une des revendications précédentes, **caractérisé en ce qu'**il est relié de manière modulaire à au moins un arrangement capteur d'images (1) supplémentaire, notamment une pluralité d'arrangements capteurs d'images (1) supplémentaires selon l'une des revendications précédentes.

14. Arrangement capteur d'images (1) selon la revendication 13, **caractérisé en ce que** l'élément porteur (6) est relié par complémentarité de formes à au moins un élément porteur (6) d'un arrangement capteur d'images (1) supplémentaire.

15. Arrangement capteur d'images (1) selon la revendication 13 ou 14, **caractérisé en ce que** la liaison de données entre lui-même et un arrangement capteur d'images (1) supplémentaire s'effectue par le biais des interfaces de données (5) des cellules de capteur (2) périphériques.

16. Arrangement capteur d'images (1) selon l'une des revendications précédentes, **caractérisé en ce que** les interfaces de données (5) sont respectivement formées par un contact à enficher, un contact brasé ou un cavalier brasé.

17. Arrangement capteur d'images (1) selon l'une des revendications précédentes, **caractérisé en ce que** l'une des cellules de capteur (2) possède un contrôleur par le biais duquel les unités d'interprétation (4) peuvent être connectées à un ordinateur externe.

18. Procédé d'acquisition d'informations d'image pour le traitement de données d'image automatique au moyen d'un arrangement capteur d'images (1) selon l'une des revendications 1 à 17, avec lequel chaque capteur d'images (3) des cellules de capteur (2) acquiert une zone partielle d'un plan d'objet et mémorise les données d'image dans la mémoire d'images de la cellule de capteur (2) respective, les zones d'acquisition (7) des capteurs d'images (3) de cellules de capteur (2) directement voisines se chevauchent, **caractérisé en ce que** les cellules de capteur (2) accèdent, par le biais de leurs interfaces de données (5), aux données d'image de la zone d'acquisition (7) en chevauchement des cellules de capteur (2) voisines et les unités d'interprétation (4) des cellules de capteur (2) déterminent respectivement une corrélation de ces données d'image.
